Europäisches Patentamt

European Patent Office

Office européen des brevets

(19)

(11) **EP 0 569 024 B1**

(12) **EUROPÄISCHE PATENTSCHRIFT**

(45) Veröffentlichungstag und Bekanntmachung des Hinweises auf die Patenterteilung:
**10.01.1996 Patentblatt 1996/02**

(51) Int. Cl.$^6$: **B65C 9/42**, G01B 7/06

(21) Anmeldenummer: 93107405.8

(22) Anmeldetag: **07.05.1993**

(54) **Etikettensensor**

Label sensor

Détecteur d'étiquettes

(84) Benannte Vertragsstaaten:
**AT CH DE DK FR GB LI**

(30) Priorität: **07.05.1992 DE 9206076 U**

(43) Veröffentlichungstag der Anmeldung:
**10.11.1993 Patentblatt 1993/45**

(73) Patentinhaber: **Heinrich Hermann GmbH & Co.**
**D-7000 Stuttgart 60 (DE)**

(72) Erfinder: **Flaig, Oswald Dipl.-Ing.**
**D-7303 Ostfildern 4 (DE)**

(74) Vertreter: **Raible, Hans, Dipl.-Ing.**
**D-70192 Stuttgart (DE)**

(56) Entgegenhaltungen:
**EP-A- 0 096 742**          **DE-A- 3 618 542**
**DE-A- 3 929 469**          **GB-A- 2 025 906**

**Beschreibung**

Die Erfindung betrifft einen Etikettensensor zur Abtastung eines mit Etiketten versehenen Trägerbandes. Ein derartiger Etikettensensor ist bekannt aus der DE-A1-3 618 542.

Bei den meisten Etikettiermaschinen wird der Etikettenvorschub durch einen Etikettensensor gesteuert. Die einzelnen Etiketten, die gewöhnlich selbstklebend sind, sind mit kleinen Abständen, typisch 1 bis 2 mm, auf einem Trägerband angeordnet, von dem sie beim Etikettiervorgang abgelöst und auf den zu etikettierenden Gegenstand, z.B. eine Flasche, übertragen werden. Das Applizieren eines Etiketts auf den zu etikettierenden Gegenstand muß mit hoher Präzision erfolgen, die als Positioniergenauigkeit bezeichnet wird. Man arbeitet hier mit engen Toleranzen, die gewöhnlich unter 1 mm liegen. Dazu ist es erforderlich, mittels eines Etikettensensors die Lage des Etiketts auf dem Trägerband genau zu erfassen. Dies geschieht meist dadurch, daß die Lage des Etikettenrands mittels eines Etikettensensors erfaßt wird.

Bei Etiketten, die nicht transparent sind, verwendet man Lichtschranken zur Erfassung der Lage des Etikettenrandes. Dies ist aber bei transparenten Etiketten nicht möglich, ebenso dann nicht, wenn das Trägerband nicht lichtdurchlässig oder nicht homogen ist.

In solchen Fällen hilft man sich damit, daß man auf dem Etikett eine Reflexmarke anbringt und diese mittels eines Lichtstrahls abtastet. Jedoch sind solche Reflexmarken bei den Designern für die Etikettengestaltung nicht populär. Auch hängt hierbei die Positioniergenauigkeit entscheidend davon ab, wie genau der Drucker die Reflexmarke auf das Etikett gedruckt hat, d.h. durch Ungenauigkeiten beim Drucken vergrößern sich die Toleranzen, und die Positioniergenauigkeit nimmt ab. Dies gilt ebenso, wenn solche Reflexmarken durch Fehler beim Drucken zu wenig Farbe erhalten, d.h. wenn der Grad ihrer Einfärbung nicht hoch genug ist. Schon derartige Fehler beim Drucken können dazu führen, daß die Positioniergenauigkeit stark abnimmt.

Aus diesen Gründen verwendet man bei transparenten Etiketten mechanische Schalter, die durch einen Abtaster für die Etikettenoberfläche gesteuert werden und den Etikettenrand abtasben. Da aber transparente Etiketten aus Folie nur eine Dicke von 0,04 mm haben, ist es sehr schwierig und zeitraubend, solche Schalter richtig einzustellen. Temperaturschwankungen, oder Erschütterungen der Maschine, können bewirken, daß sich der Schaltpunkt verschiebt, und bis dann die Maschine neu eingestellt ist, können leicht 30 Minuten oder mehr vergehen, was einen entsprechenden Produktionsausfall bedeutet. Außerdem kann bei derartigen Schaltern der Abtaster leicht Kratzspuren auf den Etiketten verursachen.

Aus der GB-A-2 025 906 kennt man einen Etikettensensor mit einem vertikal verschiebbaren Abtastorgan, das einen Permanentmagneten trägt. Um diesen Permanentmagneten herum ist eine Spule angeordnet.

Das Abtastorgan gleitet auf einem Etikettenband und wird durch die Etiketten in Höhenrichtung verschoben, wobei in der Spule entsprechende Spannungen induziert werden, die eine Etikettiermaschine steuern sollen. Das Prinzip hat sich aber nicht bewährt, da durch die ständigen Vibrationen solcher Maschinen zu viele Störsignale erzeugt werden.

Aus der EP-A-0 096 742 kennt man eine Meßvorrichtung für die Messung von Bogendicken bei Druckmaschinen. Mit dieser Meßvorrichtung soll verhindert werden, daß zwei aufeinanderliegende Bögen, sogenannte Doppelbögen, der Druckmaschine zugeführt werden. Deshalb werden die Bögen durch eine Rolle abgetastet. Neben der Rolle befinden sich zwei ferromagnetische Kerne, die jeweils mit einer Wicklung versehen sind und die im Betrieb mit Hochfrequenz erregt werden. Das Signal an diesen Wicklungen wird während einer Umdrehung der Rolle integriert, und das integrierte Signal erlaubt eine zuverlässige Unterscheidung zwischen einem Einfachbogen und einem Doppelbogen. Eine solche Vorrichtung eignet sich jedoch nicht dazu, die Kanten von Etiketten zu erfassen.

Es ist deshalb eine Aufgabe der Erfindung, einen neuen Etikettensensor bereitzustellen.

Nach der Erfindung wird diese Aufgabe gelöst durch den Gegenstand des Anspruchs 1. Man erhält so einen Etikettensensor, der auch zur Verarbeitung transparenter Etiketten geeignet ist. Im montierten Zustand des Etikettensensors an einer Etikettiermaschine liegen die Etiketten gegen eine Anlauffläche an, z.B. gegen die sogenannte Ablösekante, und wenn diese Anlauffläche elektrisch leitend ausgebildet ist, wirkt sie mit der Wicklung des Etikettensensors und mit dem von dieser erzeugten HF-Magnetfeld zusammen und erlaubt eine sehr präzise Erfassung des Abstands des Abtasters von dieser Anlauffläche. Die Einstellarbeiten an einem erfindungsgemäßen Etikettensensor können sehr einfach und mit minimalem Zeitaufwand auf der elektrischen Seite vorgenommen werden, z.B. durch Verstellung eines Potentiometers. Der mindestens eine Niederhalter preßt das Etikettenband gegen die Anlauffläche und ermöglicht so eine zuverlässige Erfassung der Etiketten durch das Sensorsystem. Da letzteres nur eine kleine Masse benötigt, kann es das Etikettenband mit geringen Anpreßkräften abtasten. Dadurch vermeidet man Kratzspuren auf den Etiketten, und der Verschleiß am Abtaster wird gering. Trotz der hohen Empfindlichkeit, die man mit einem solchen Sensor erzielen kann, ist er doch unempfindlich gegen die Erschütterungen, wie sie bei solchen Maschinen unvermeidlich sind. Er eignet sich vor allem auch für hohe Etikettiergeschwindigkeiten, z.B. über 30 m/min.

In Weiterbildung der Erfindung geht man mit Vorteil so vor, daß der Abtaster im unbelasteten Zustand über eine Ebene vorsteht, welche durch das proximale Ende des mindestens einen Niederhalters geht.

Der Abtaster wird bevorzugt im Bereich des mit einer Wicklung versehenen ferromagnetischen Kerns angeordnet, wobei es besonders vorteilhaft sein kann, wenn der Abtaster im Bereich der Längsachse des ferromagnetischen Kerns angeordnet wird. Durch geeignete Wahl der Länge des Abtasters kann der Abstand zwischen dem ferromagnetischen Kern und dem elektrisch leitenden Abschnitt einer Anlauffläche (für das Etikettenband) auf einen optimalen Wert eingestellt werden, z.B. auf einen Bereich, in welchem der Etikettensensor weitgehend linear und mit guter Empfindlichkeit arbeitet.

Einen sehr verschleißfesten Sensor erhält man in bevorzugter Weise dadurch, daß der Abtaster mindestens an seinem zur Anlage gegen das Etikettenband bestimmten Ende aus einem verschleißarmen Material ausgebildet ist, insbesondere aus Oxidkeramik, einem Halbedelstein, oder einem Edelstein.

Eine andere Lösung der gestellten Aufgabe ergibt sich durch den Gegenstand des Anspruchs 11. Eine solche Anordnung ist sehr robust und einfach. Sie eignet sich besonders für dicke Etiketten.

Eine andere Weiterbildung der Erfindung ist dadurch gekennzeichnet, daß die Auswerteschaltung für die Diskriminierung zwischen Etiketten einerseits und Lücken zwischen Etiketten andererseits ausgebildet ist, wobei sich eine besonders vorteilhafte Ausgestaltung dadurch auszeichnet, daß in der Auswerteschaltung eine Diskriminierung zwischen Etikett und Lücke mittels eines Dicken-Referenzwertes vorgesehen ist.

Dies ermöglicht eine sehr einfache Justierung des Etikettensensors durch elektrische Verstellung des Dicken-Referenzwertes entsprechend der jeweiligen Dicke des verwendeten Trägerbandes, wobei eine Anzeige des Schaltzustandes die Einstellung erleichtert und beschleunigt.

Eine bevorzugte und außerordentlich vorteilhafte Verwendung eines erfindungsgemäßen Etikettensensors ist die Verarbeitung von transparenten Etiketten, doch eignet sich ein solcher Etikettensensor prinzipiell für alle Arten von Etiketten, wobei es sich in überraschender Weise gezeigt hat, daß er auch bei Etiketten funktionsfähig ist, welche mit einer Aluminiumschicht überzogen sind. Dadurch entfallen Umstellarbeiten, wenn Etiketten anderer Art verwendet werden sollen.

Mit großem Vorteil wird ein erfindungsgemäßer Etikettensensor direkt am vordersten Bereich der Ablösekante einer Etikettiermaschine angeordnet, da sich dann eine außerordentlich hohe Positioniergenauigkeit ergibt und Fehler in der Etikettenteilung auf dem Etikettenband keine Rolle mehr spielen, insbesondere, wenn der Abtaster am vordersten Bereich der Ablösekante angeordnet ist.

Weitere Einnzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:

Fig. 1 ein erstes Ausführungsbeispiel einer erfindungsgemäßen Etikettiermaschine mit einem erfindungsgemäßen Etikettensensor, in schematischer Darstellung,

Fig. 1A eine vergrößerte Darstellung der Einzelheit "A" der Fig. 1,

Fig. 2 einen Schnitt durch eine bevorzugte Ausführungsform des bei Fig. 1 verwendeten erfindungsgemäßen Etikettensensors, gesehen längs der Linie II-II der Fig. 3,

Fig. 3 eine Draufsicht auf den Etikettensensor der Fig. 2, gesehen in Richtung des Pfeiles III der Fig. 2,

Fig. 4 eine Seitenansicht, gesehen in Richtung des Pfeiles IV der Fig. 3,

Fig. 5 eine stark vergrößerte Darstellung des eigentlichen Sensorsystems der Fig. 1 bis 4,

Fig. 6 eine schematische Darstellung einer elektrischen Auswerteschaltung,

Fig. 7 eine Draufsicht auf ein mit Selbstklebeetiketten versehenes Trägerband, gesehen von der Etikettenseite; ein solches Band wird als Etikettenband oder auch als Haftverbund bezeichnet,

Fig. 8 eine Seitenansicht des Etikettenbands der Fig. 7, wobei die Dicke stark übertrieben dargestellt ist, denn die Gesamtdicke eines solchen Etikettenbands liegt gewöhnlich zwischen 0,1 und 0,2 mm,

Fig. 9 eine Kurve, welche den Zusammenhang zwischen dem gemessenen Abstand D (zwischen dem Ferritkern des Sensors und der Anlauffläche) einerseits und der Ausgangsspannung andererseits zeigt,

Fig. 10A eine schematische Darstellung der Abtastung eines Etikettenbands,

Fig. 10B die zugehörige Ausgangsspannung des Etikettensensors,

Fig. 11 eine Variante zu Fig. 1, wobei der Etikettensensor in einem großen Abstand von der Ablösekante angeordnet ist,

Fig. 11A eine vergrößerte Darstellung der Einzelheit "B" der Fig. 11,

Fig. 12 einen Schnitt durch eine Variante zu dem in Fig. 2 dargestellten Etikettensensor, gesehen längs der Linie XII-XII der Fig. 13,

| Fig. 13 | eine Draufsicht auf den Etikettensensor der Fig. 12, gesehen in Richtung des Pfeiles XIII der Fig. 12, |
|---|---|
| Fig. 14 | eine Variante zu der in Fig. 6 dargestellten Auswerteschaltung, |
| Fig. 15 | eine zweite Variante eines erfindungsgemäßen Etikettensensors, gesehen in Richtung des Pfeiles XV der Fig. 16, |
| Fig. 16 | eine Seitenansicht, gesehen in Richtung des Pfeiles XVI der Fig. 15, |
| Fig. 17 | einen Schnitt, gesehen längs der Linie XVII-XVII der Fig. 15, und |
| Fig. 18 | einen Schnitt, gesehen längs der Linie XVIII-XVIII der Fig. 15. |

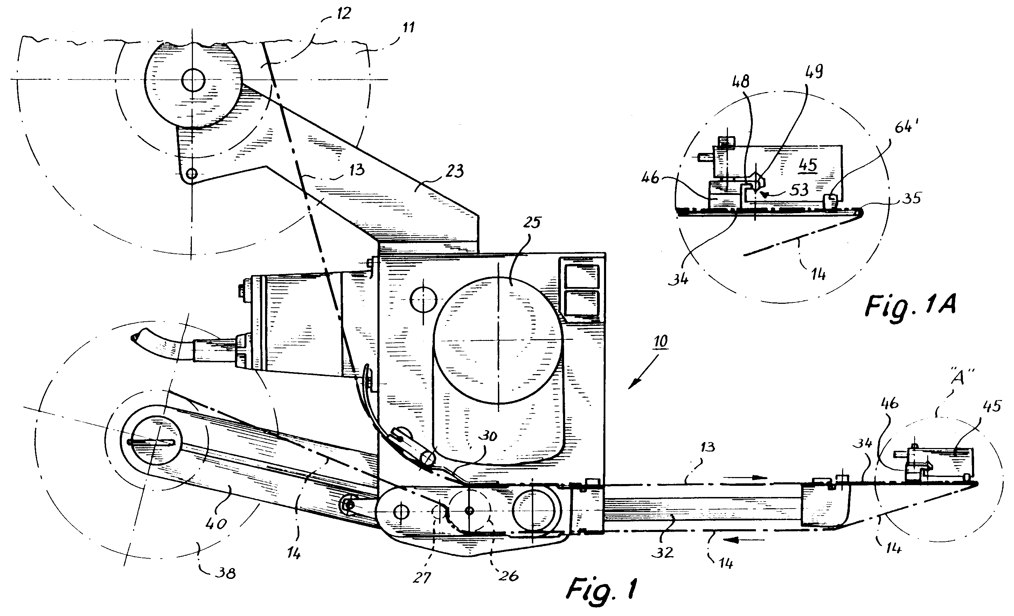

Fig. 1 zeigt eine Draufsicht auf ein bevorzugtes Ausführungsbeispiel einer Etikettiermaschine 10. Diese hat einen Rollenhalter 11 für eine Vorratsrolle 12 mit Etikettenband 13, das in Fig. 1 mit einer strichpunktierten Linie angedeutet ist.

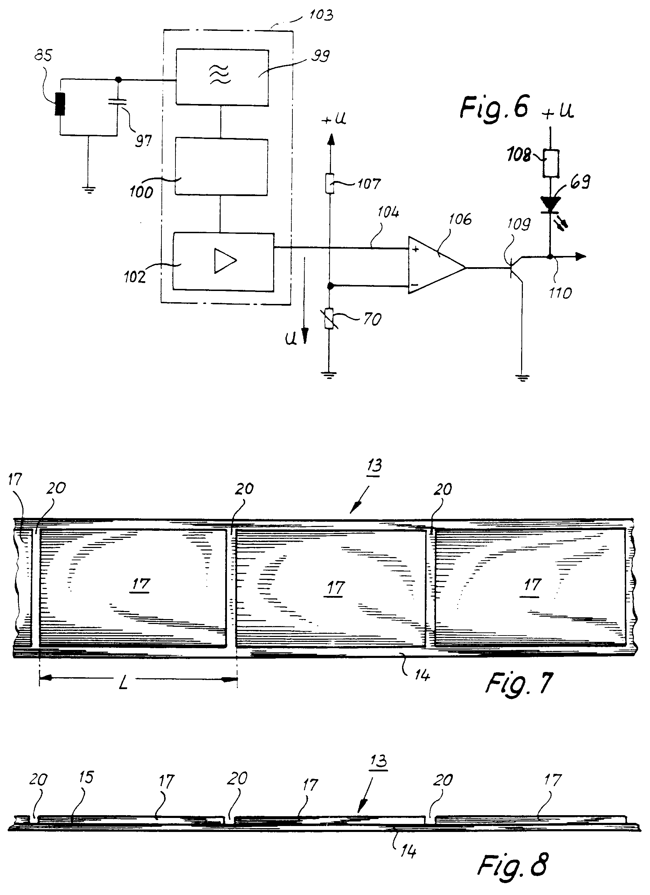

Die Fig. 7 und 8 zeigen den prinzipiellen Aufbau eines solchen Etikettenbandes 13. Dieses hat ein Trägerband 14, das gewöhnlich aus einem lichtdurchlässigen Spezialpapier hergestellt ist, das auf seiner in Fig. 8 oberen Seite mit einer Silikonschicht 15 versehen ist. Das Trägerband 14 hat gewöhnlich eine Dicke von ca. 0,06 mm, mit geringen Dickenschwankungen von etwa +/-1,3 %.

Auf der Silikonschicht 15 befinden sich Selbstklebeetiketten 17, die auf ihrer Unterseite mit einer Leimschicht von ca. 0,03 mm Dicke versehen sind und die selbst eine Dicke im Bereich von 0,04...0,1 mm haben. Etiketten aus transparentem Material, die auch als Folienetiketten bezeichnet werden, haben eine Dicke von nur 0,04 mm und stellen deshalb ein besonders schwieriges Problem für einen Etikettensensor dar.

Es ist klar, daß in Fig. 8 der Dickenmaßstab stark übertrieben dargestellt ist, denn eine Dicke von 0,13 mm wäre zeichnerisch nicht darstellbar. Der Leser sollte aber versuchen, sich diese Dickenverhältnisse zu vergegenwärtigen, wenn er die vorliegende Erfindung und die Problemstellung verstehen will.

Zwischen den Etiketten 17 befinden sich Lücken 20 mit einer Breite von gewöhnlich 1...2 mm, die dadurch entstanden sind, daS man entsprechende Teile zwischen den Etiketten 17 herausgestanzt hat. Diese (herausgestanzten) Teile werden als Stege bezeichnet. Gelegentlich bleibt bei der Herstellung ein solcher Steg zwischen zwei Etiketten zurück und macht es dann für den Etikettensensor unmöglich, das betreffende Etikett zu erkennen. Zusammen mit den Stegen werden auch um die Etiketten 17 herum Teile weggestanzt und entfernt.

Ein solches Etikettenband 13 wird auch als Haftverbund bezeichnet, weil die Selbstklebeetiketten 17 auf dem Trägerband 14 haften. Sie können aber mit bekannten Techniken vom Trägerband 14 abgelöst und auf einen (nicht dargestellten) Gegenstand übertragen werden, der etikettiert werden soll.

Da die Etiketten 17 durch wiederholte Stanzvorgänge entstehen, kann ihr Abstand etwas schwanken. Diesen Abstand L (Fig. 7) bezeichnet man als Etikettenteilung, und er ist, wie gesagt, nicht völlig konstant.

Der Rollenhalter 11 ist über einen Trägerarm 23 mit der Antriebseinheit 25 der Etikettiermaschine 10 verbunden. Die Antriebseinheit 25 enthält einen im Betrieb ständig rotierenden Elektromotor, sowie eine (nicht dargestellte) Brems-Kupplungs-Kombination zum intermittierenden Antrieb einer Positionierrolle 26, gegen welche eine Andrückrolle 27 anliegt.

An der Antriebseinheit 25 befindet sich eine Bandbremse 30, welche dazu dient, das Etikettenband 13 zu bremsen und dadurch straff zu halten. An der Antriebseinheit 25 ist auch, über einen Tragarm 32, eine Ablösekante 34 in Form eines geraden Blechs befestigt, und an dieser Ablösekante 34, die in Fig. 1A vergrößert dargestellt ist, wird das Etikettenband 13 um ca. 340° umgelenkt, wodurch an seinem rechten Ende 35 (Fig. 1A) die Etiketten 17 abgelöst und dort z.B. auf einen (nicht dargestellten) Saugstempel oder dergleichen übergeben werden.

Der Tragarm 32 trägt vielfach zusätzliche Geräte, z.B. einen Drucker zum Bedrucken der Etiketten 17, oder eine Lesevorrichtung für codierte Etiketten 17. In vielen Fällen ist er nicht an der Antriebseinheit 25 selbst befestigt, sondern an einer entsprechenden Montagefläche oder dergleichen.

Ab dem rechten Ende 35 der Ablösekante 34 ist nur noch das Trägerband 14 vorhanden. Dieses wird unterhalb der Ablösekante 34 nach links zurückgeführt. Es ist zwischen der Positionierrolle 26 und der Andrückrolle 27 durchgeführt, und von dort zu einer Trägerbandaufwicklung 38, die über einen Tragarm 40 an der Antriebseinheit 25 befestigt ist. (Die Tragarme 23 und 40 können selbstverständlich auch an anderen Stellen befestigt sein als an der Antriebseinheit 25.)

Zur Steuerung des Antriebs der Positionierrolle 26 (über die erwähnte Brems-Kupplungs-Kombination) dient ein Etikettensensor 45, der am rechten Ende der Ablösekante 34 angeordnet ist und mit dieser zusammenwirkt. Es ist darauf hinzuweisen, daß der Etikettensensor 45 hier an einer feststehenden Ablösekante angeordnet ist, aber ebensogut an einer beweglichen Spendekante angeordnet werden könnte, wie sie z.B. die DE 36 18 542 A1 der Anmelderin zeigt.

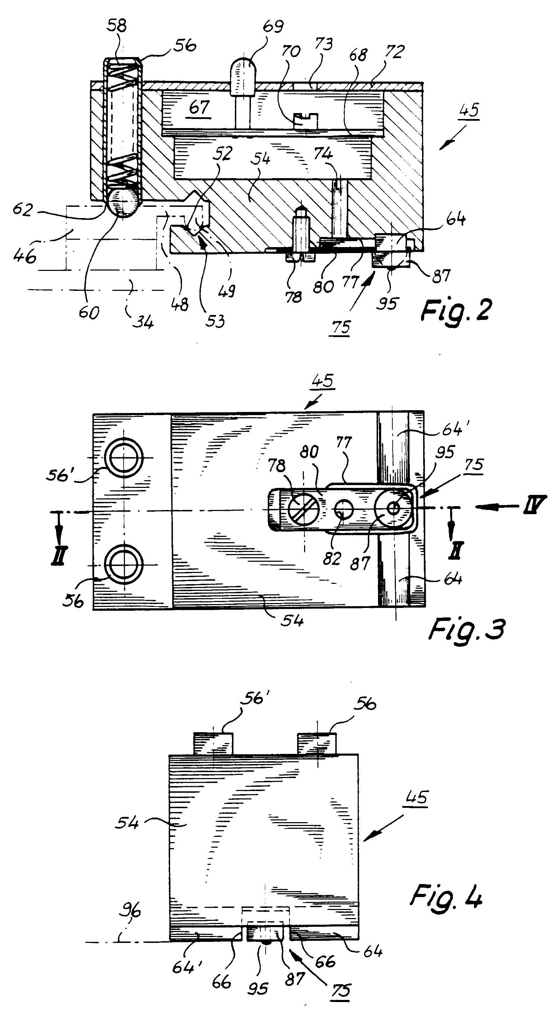

Zur Befestigung des Etikettensensors 45 ist auf der Oberseite der Ablösekante 34 eine Halterung 46 befestigt. Diese hat einen nach rechts ragenden Vorsprung 48 mit einem nach unten ragenden Zapfen 49, wie in Fig. 1A klar dargestellt, und dieser Zapfen 49 greift in eine entsprechende prismenförmige Aussparung 52 (Fig. 2) eines Trägerteils 54 des Etikettensensors 45 ein und bildet zusammen mit diesem ein Gelenk 53.

Im linken Abschnitt des Trägerteils 54 sind zwei vertikal verlaufende Rohre 56, 56' befestigt, die identisch ausgebildet sind. Sie enthalten jeweils eine Feder 58 (Fig. 2), die am oberen Ende des jeweiligen Rohres abgestützt ist und mit ihrem unteren Ende gegen eine Kugel 60 anliegt, die ihrerseits gegen eine Verengung 62 am unteren Ende des Rohres 56 bzw. 56' anliegt, also dieses Rohr nicht verlassen kann.

Nach der Montage liegen diese beiden Kugeln 60 mit Vorspannung gegen entsprechende Vertiefungen in der Oberseite der Halterung 46 an und bewirken dadurch ein Drehmoment, das im Uhrzeigersinn um das Gelenk 53 herum wirkt, das von dem Zapfen 49 und der prismenförmigen Aussparung 52 gebildet wird und dessen Drehachse parallel zur Ebene des Etikettenbands 13 (im Bereich der Ablösekante 34) verläuft, also in Fig. 1 bzw. 1A waagerecht.

An der Unterseite des Trägerteils 54 sind rechts, bezogen auf Fig. 2 und 3, zwei Niederhalter 64, 64' befestigt. Auf ihrer dem Etikettenband 13 zugewandten Seite sind diese abgerundet und liegen also mit diesem abgerundeten Profil auf dem Etikettenband 13 und pressen dieses dort gegen die Ablösekante 34, die hier als Auflagefläche wirkt. Dies hat sich als vorteilhaft für die Arbeitsweise erwiesen. Die Anpressung erfolgt durch das Drehmoment, welches durch die Federn 58 erzeugt wird. Die beiden Niederhalter 64, 64' erstrecken sich quer zur Bewegungsrichtung des Etikettenbands 13. Sie sind aus einem verschleißfesten Werkstoff hergestellt, bevorzugt aus Oxidkeramik, um einen zu raschen Verschleiß zu verhindern. Sie sind bevorzugt austauschbar am Trägerteil 54 montiert, und ihre Aufgabe ist es, das Etikettenband 13 ständig in Anlage gegen seine Anlauffläche zu halten, damit sich bei der Messung durch den Etikettensensor 45 keine falschen Resultate ergeben.

Wie die Fig. 3 und 4 zeigen, erstrecken sich die beiden Niederhalter 64, 64' nicht über die volle Breite des Etikettensensors 45 (die Fig. 2 bis 4 zeigen diesen in einem vergrößerten Maßstab, nämlich etwa doppelt vergrößert), sondern zwischen ihnen bleibt ein Abstand 66 (Fig. 4) frei, in welchem sich das eigentliche Sensorsystem befindet, das nachfolgend beschrieben wird.

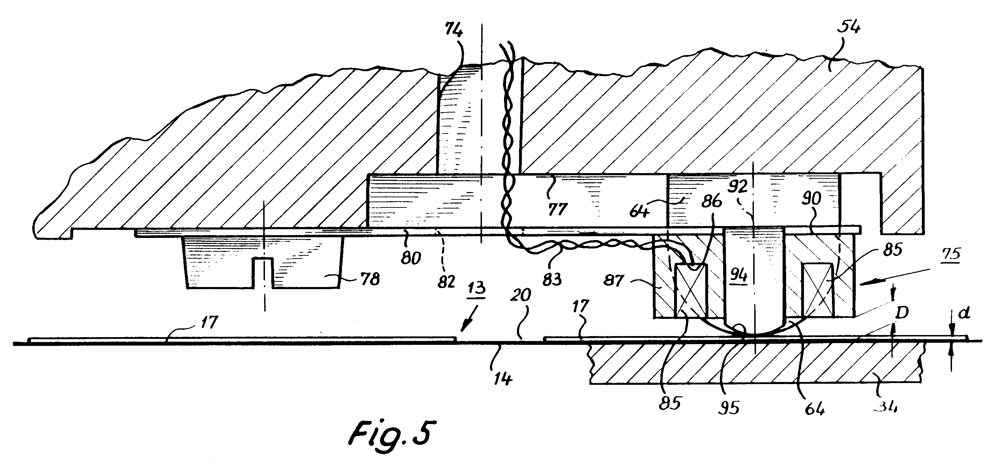

Das Trägerteil 54 hat an seiner Oberseite eine Ausnehmung 67 und enthält dort eine Platte 68 mit einer gedruckten Schaltung, auf der sich eine Leuchtdiode 69 und ein Einstellpotentiometer 70 sowie andere, nicht dargestellte elektronische Bauteile einer Auswerteschaltung befinden. Die Ausnehmung 67 ist nach oben durch eine Deckplatte 72 abgeschlossen, in welcher sich ein Loch 73 befindet, durch welches das Potentiometer 70 verstellt werden kann. Ferner erstreckt sich von der Ausnehmung 67 eine Bohrung 74 nach unten zu einer länglichen Ausnehmung 77, in welcher sich das eigentliche Sensorsystem 75 befindet, das in Fig. 5 in stark vergrößertem Maßstab dargestellt ist, um das Verständnis zu erleichtern. Dabei ist darauf hinzuweisen, daß das dargestellte Sensorsystem 75 überhaupt erst dadurch zum Sensorsystem wird, daß es mit einem ihm gegenüberliegenden, elektrisch leitenden Element der Etikettiermaschine 10 zusammenarbeitet, z.B. bei Fig. 1 der Ablösekante 34 aus Blech, oder einem anderen elektrisch leitenden Element in oder an einer Auflagefläche.

Wie die Fig. 2, 3 und 5 zeigen, ist an der Unterseite des Trägerteils 54 mittels einer Schraube 78 eine Blattfeder 80 befestigt, die gewöhnlich aus Stahlblech hergestellt ist und z.B. die Abmessungen 5 x 17 x 0,3 mm haben kann. Von ihrer Befestigungsstelle ragt sie in Bewegungsrichtung des Etikettenbands 13 und etwa parallel zu diesem, also in Fig. 1 nach rechts. Etwa in ihrer Mitte hat die Blattfeder 80 ein Loch 82, das mit der Bohrung 74 fluchtet und ebenso wie diese zur Durchführung einer elektrischen Anschlußleitung 83 (Fig. 5) dient, die an die gedruckte Schaltung 68 (Fig. 2) angeschlossen ist.

Die Anschlußleitung 83 führt zu einer Wicklung 85, die in einer rinnenförmigen Ausnehmung 86 eines Halbschalenkerns 87 aus Ferrit, also aus ferromagnetischem Material, angeordnet ist. Dieser Halbschalenkern hat typisch einen Außendurchmesser von 5 mm, und die Wicklung kann z.B. 100 Windungen haben. Beim Halbschalenkern 87 handelt es sich um einen typischen Kern der Hochfrequenztechnik, da der Wicklung 85 über die Leitung 83 im Betrieb eine hochfrequente Spannung mit einer Frequenz zugeführt wird, die gewöhnlich zwischen 0,3 und 1 MHz liegt.

Der Halbschalenkern oder Halbschalenferrit 87 ist mit seiner geschlossenen Oberseite 90 in der dargestellten Weise an der Unterseite des freien Endes der Blattfeder 80 befestigt, z.B. durch Kleben. Wird seine Wicklung 85 mit Hochfrequenz erregt, so gibt er auf seiner Unterseite ein entsprechendes hochfrequentes Magnetfeld ab, und dieses Magnetfeld erzeugt in dem gegenüberliegenden elektrisch leitenden Element 34 Wirbelströme, und zwar umso mehr, je kleiner der Abstand D (Fig. 5) zwischen der Unterseite des Magnetkerns 87 und dem elektrisch leitenden Element 34 ist.

In einer Ausnehmung im Bereich der Mittelachse 92 des Magnetkerns 87 befindet sich ein mechanischer Abtaster 94, der mit seinem freien Ende 95, das bevorzugt aus Hartkeramik, Rubin oder Diamant besteht, in der dargestellten Weise mit Vorspannung gegen die Etikettenbahn 13 anliegt. Der Abtaster ist bevorzugt in eine entsprechende Bohrung des Halbschalenferrits 87 eingeklebt.

Die Blattfeder 80 ist so ausgebildet und am Trägerteil 54 montiert, daß das freie Ende 95 des Abtasters 94 im unbelasteten Zustand über die Ebene 96 vorsteht, in der die unteren Enden der Niederhalter 64, 64' liegen, vgl. Fig. 4.

Naturgemäß könnte der Abtaster 94 auch neben dem Magnetkern 87 angeordnet sein, doch wird die dargestellte Lösung bevorzugt.

Wie Fig. 6 zeigt, ist zur Wicklung 85 ein Kondensator 97 parallelgeschaltet, der zusammen mit der Induktivität der Wicklung 85 einen Schwingkreis für die gewünschte Betriebsfrequenz bildet, welche, wie gesagt, gewöhnlich zwischen 0,3 und 1 MHz liegt. Hierzu ist ein Oszillator 99 vorgesehen, an den ein Demodulator 100 und ein Verstärker 102 für die demodulierte Spannung angeschlossen sind. Die Teile 99, 100 und 102 sind in Form eines handelsüblichen IC erhältlich, z.B. des IC TGA505 der Siemens AG.

Über eine Leitung 104 wird die Ausgangsspannung U des Verstärkers 102 dem positiven Eingang eines Spannungskomparators 106 zugeführt, dessen negativer Eingang an einen Spannungsteiler aus einem Festwiderstand 107, der an eine Spannung + U angeschlossen ist, und dem Potentiometer 70 (Fig. 2), das an Masse liegt, angeschlossen ist. An den Ausgang des Komparators 106 ist ein Schalttransistor 109 angeschlossen, dessen Ausgang 110 an die Steuerung für die bereits erwähnte Brems-Kupplungs-Kombination im Hauptteil 25 der Etikettiermaschine 10 angeschlossen und über die LED 69 und einen Widerstand 108 mit + U verbunden ist.

Mit Hilfe des Potentiometers 70 wird von der Bedienungsperson ein Dicken-Referenzwert vorgegeben, der größer ist als die Dicke des Trägerbands 14, aber kleiner als die kombinierte Dicke von Trägerband 14 und Etikett 17. Deshalb wechselt die Ausgangsspannung des Komparators 106 ihr Vorzeichen, wenn der Taster 94 von einem Etikett 17 in eine Lücke 20 zwischen zwei Etiketten 17 gleitet und dadurch seine Lage relativ zum elektrisch leitenden Element 34 verändert.

Wenn der Etikettensensor 45 eine Lücke 20 zwischen zwei Etiketten 17 erfaßt, also das vorderste Etikett bereits zum größten Teil vom Trägerband 14 abgelöst ist, gibt der Etikettensensor 45 ein entsprechendes Signal an die Steuerung der Brems-Kupplungs-Kombination. Diese stoppt dann - nach einer vorgegebenen Nachlaufzeit - die Positionierrolle 26. Zu diesem Zeitpunkt, an dem die Positionierrolle 26 steht, befindet sich der Abtaster 95 bereits auf dem nächsten Etikett 17, so daß man weiß, daß ein Etikett für den nächsten Etikettiervorgang vorhanden ist. Dies wird entsprechend von der Steuerung kontrolliert. Das Etikett 17, das am vorderen Ende 35 der Ablösekante 34 abgegeben wurde, wird entweder direkt auf einen zu etikettierenden Gegenstand übertragen, oder es wird z.B. von einem (nicht dargestellten) Saugstempel übernommen und auf den zu etikettierenden Gegenstand übertragen. Wenn der Etikettiervorgang beendet ist, wird die Positionierrolle 26 wieder angetrieben, und der beschriebene Vorgang wiederholt sich.

Die Wirkungsweise der Erfindung beruht darauf, daß die Amplitude des Oszillators 99 umso stärker gedämpft wird, je mehr sich der Halbschalenferritkern 87 dem elektrisch leitenden Element 34 nähert, also je kleiner der Abstand D (Fig. 5) wird.

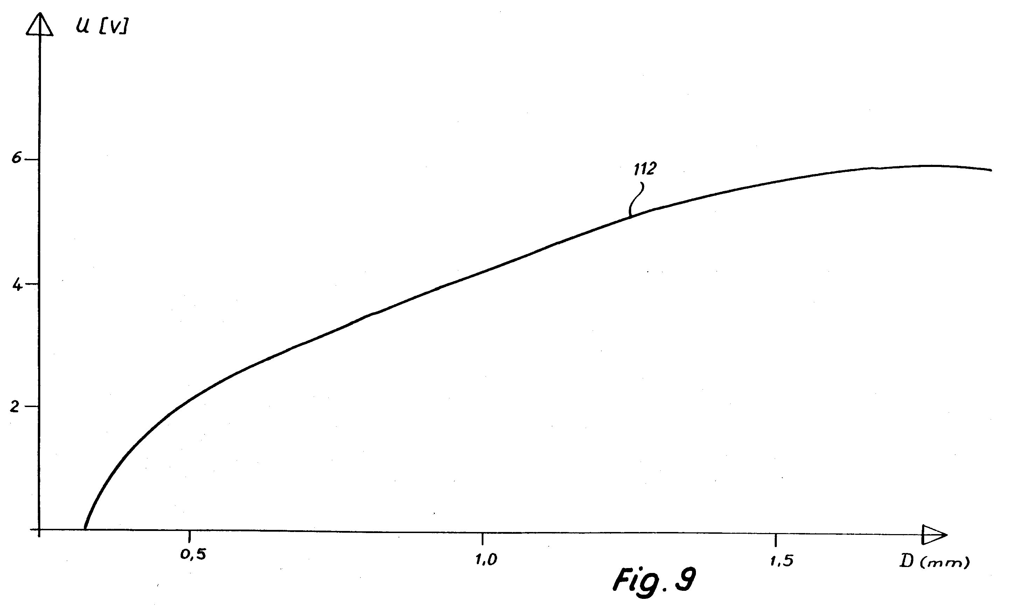

Fig. 9 zeigt diesen Zusammenhang an einer beispielhaften Meßkurve 112. Bei einem Abstand D unter 0,2 mm werden die Oszillatorschwingungen völlig blockiert, d.h. man erhält kein Ausgangssignal U. Oberhalb eines Abstands D von etwa 0,2 mm beginnt der Oszillator 99 zu schwingen, und mit zunehmendem Abstand nimmt seine Amplitude und damit die Ausgangsspannung U des Verstärkers 102 in der dargestellten Weise zu. Man erkennt auch, daß man für Werte von D zwischen 0,6 und 1,4 mm einen ziemlich linearen Bereich erhält. Durch geeignete Wahl der Länge des Abtasters 94, 95 kann man eine geeignete Stelle dieses Bereichs aussuchen. Der eigentliche Arbeitshub an der ausgewählte Stelle der Meßkurve 112 beträgt - bei einem Folienetikett - nur etwa 0,07 mm, und dem entspricht auch nur ein entsprechend kleiner Spannungshub, aber dieser kann mittels eines geeigneten Spannungskomparators 106 weiter verstärkt werden, so daß man einen ausreichenden Spannungshub zum Aussteuern des Schalttransistors 109 erhält.

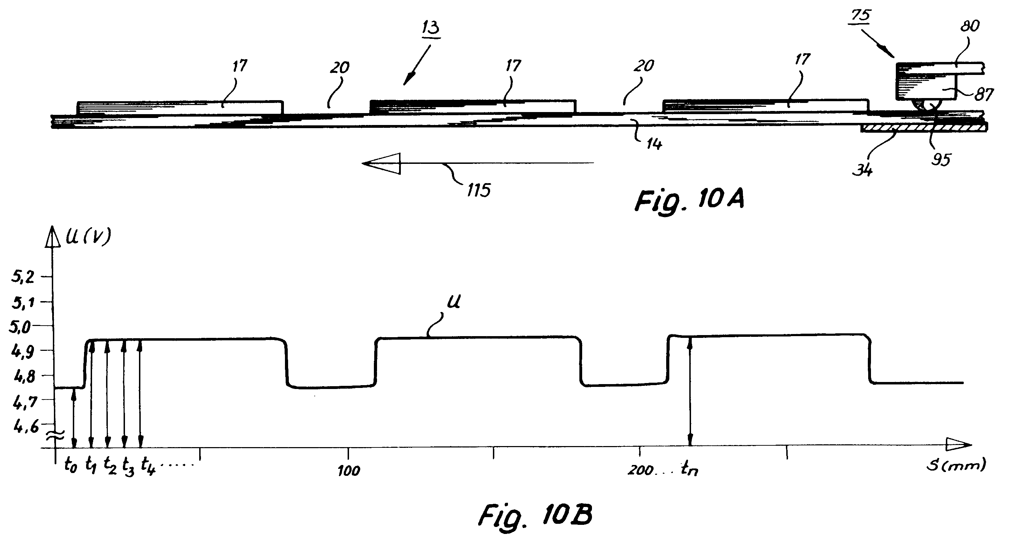

Die Fig. 10A und 10B zeigen die Messung anschaulich an einem Beispiel. Fig. 10A zeigt ein Etikettenband 13, das sich in Richtung eines Pfeiles 115 nach links bewegt, wobei es unter einem Sensor 75 durchläuft, wie er in den Fig. 1 bis 4 dargestellt ist.

Fig. 10B zeigt die Ausgangsspannung U am Ausgang 104 der Fig. 6. Man erkennt, daß diese Spannung ein elektrisches Abbild des Etikettenbands 13 darstellt, etwa vergleichbar mit dem Sonarbild eines Tiefenverlaufs im Meer. Mit einer Spannung dieser Art sind genaue Steuerungsvorgänge auch bei hohen Etikettiergeschwindigkeiten, z.B. von 1 m/s möglich, wie Versuche der Anmelderin ergeben haben.

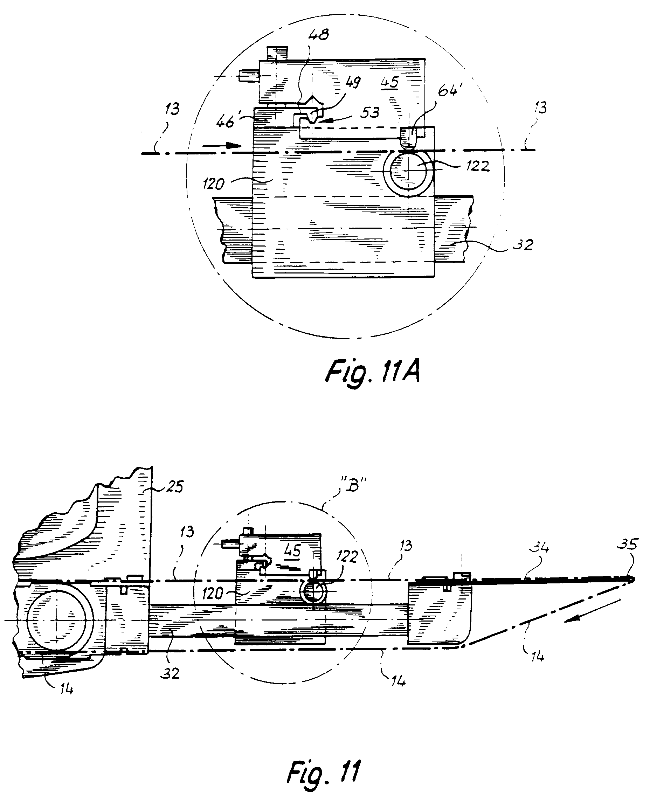

Die Fig. 11 und 11A zeigen eine Variante zu den Fig. 1 und 1A, und zwar liegt der Unterschied darin, daß hier der Etikettensensor 45, der mit demjenigen der Fig. 1 bis 4 übereinstimmt, am Arm 32 angeordnet ist. Die Etikettiermaschine 10 ist im übrigen gleich ausgebildet wie in Fig. 1, weshalb sie auch nur ausschnittsweise dargestellt ist. Gleiche oder gleichwirkende Teile wie in den vorhergehenden Figuren werden gewöhnlich mit denselben Bezugszeichen bezeichnet und nicht nochmals beschrieben.

Am Arm 32 ist hier ein Trageteil 120 befestigt, an dessen Oberseite eine Halterung 46' befestigt ist, deren Form exakt der Halterung 46 der Fig. 1 und 1A entspricht, weshalb sie hier nicht erneut beschrieben wird. Am Trageteil 120 befindet sich ferner eine Anlauffläche 122, welche dem Abtaster 94, 95 und den Niederhaltern 64 und 64' gegenüberliegt und welche aus einem elektrisch leitenden Werkstoff hergestellt ist. Sie arbeitet mit dem Sensor 75 zusammen, der in den Fig. 11 und 11A nicht sichtbar ist.

Im Vergleich zu Fig. 1 bzw. 1A ist die Anordnung nach Fig. 11/11A weniger vorteilhaft, da Schwankungen der Etikettenteilung L (Fig. 7) sich hier stärker bemerkbar machen, denn der Abstand vom Etikettensensor 45 zum rechten Ende 35 der Ablösekante 34 ist hier größer als bei Fig. 1, so daß Schwankungen der Etikettenteilung L hier größere Toleranzen bei der Etikettierung zur Folge haben. Jedoch kann man gezwungen sein, aus Platzgründen von der Lösung nach Fig. 11/11A Gebrauch zu machen.

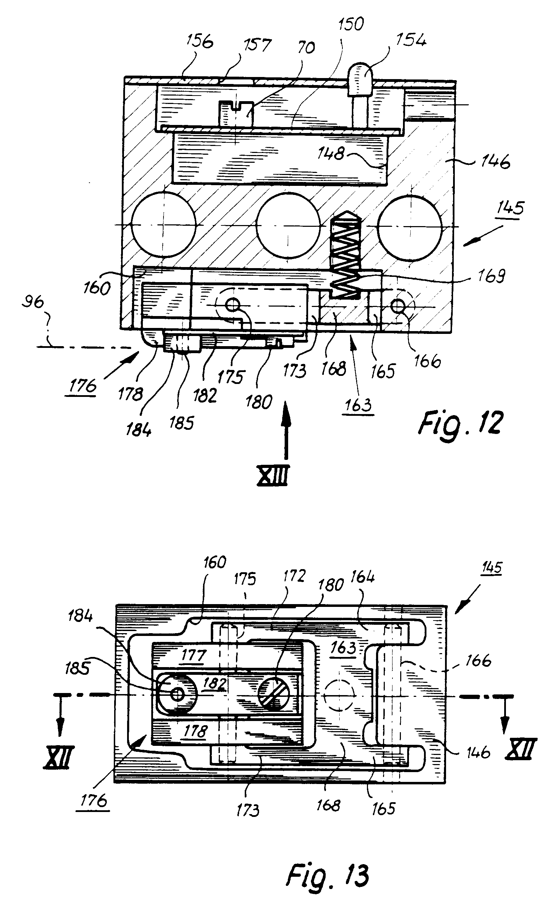

Die Fig. 12 und 13 zeigen eine Variante zu dem Etikettensensor nach den Fig. 1 bis 4. Dieser wird starr an der Etikettiermaschine 10 montiert, z.B. durch Festschrauben an einem Teil der Etikettiermaschine. Dies ist deshalb nicht dargestellt. Er kann z.B. ebenfalls oberhalb der Ablösekante 34 montiert werden, analog Fig. 1, und benötigt zu seiner Funktion ebenfalls eine Anlauffläche (für das Etikettenband 13) mit einem elektrisch leitenden Element, wie bereits ausführlich beschrieben.

Der Etikettensensor 145 hat ein Trägerteil 146, das an seiner Oberseite eine Ausnehmung 148 hat, in der eine Platte 150 mit einer gedruckten Schaltung befestigt ist, von der nur das Potentiometer 70 und eine LED 154 dargestellt sind. Die Ausnehmung 148 ist nach oben durch eine Deckplatte 156 abgeschlossen, in der ein Loch 157 zur Bedienung des Potentiometers 70 vorgesehen ist. Die LED 154 dient, ebenso wie die LED 69 der Fig. 2, zur Anzeige des Schaltzustands, zeigt also an, ob sich der Abtaster auf einem Etikett 17 oder in einer Lücke 20 zwischen zwei Etiketten befindet.

An der Unterseite des Trägerteils 146 befindet sich eine längliche Ausnehmung 160, und am rechten Ende dieser Ausnehmung 160 ist eine Schwinge 163 befestigt, die in der Draufsicht von unten (Fig. 13) etwa die Form eines H hat. Ihre beiden rechten Endabschnitte 164, 165 sind über eine Welle 166 am Trägerteil 146 angelenkt und können sich deshalb um eine waagerechte Drehachse drehen. Gegen den Mittelsteg 168 der Schwinge 163 liegt von oben eine Druckfeder 169 an, deren Oberseite am Trägerteil 146 in der dargestellten Weise abgestützt ist. Die beiden linken Endabschnitte 172, 173 der Schwinge 163 lagern zwischen sich drehbar - mittels einer horizontalen Achse 175 - einen Niederhalteschuh 176, der auf beiden Längsseiten unten mit einem kufenförmigen Niederhalter 177 bzw. 178 versehen ist, so daß also der Niederhalterschuh 176 im Prinzip wie ein Schlitten aufgebaut ist und im Betrieb mit seinen beiden Kufen auf dem Etikettenband 13 gleitet und dieses gegen die zugehörige Auflagefläche preßt.

Zwischen den Kufen 177 und 178 ist mittels einer Schraube 180 ein Federblech 182 befestigt, das an seinem linken, freien Ende einen Halbschalenferritkern 184 mit einer (nicht dargestellten) Wicklung und mit einem Abtaster 185 trägt. Das Federblech 182 ist, bezogen auf Fig. 12, an seinem linken, freien Ende bei Belastung frei nach oben beweglich und kann deshalb den Unebenheiten eines Etikettenbands 13 folgen.

Der Magnetkern 184 ist auf das freie Ende des Federblechs 182 aufgeklebt. Er ist, einschließlich seines Abtasters 185 und seiner Wicklung, identisch ausgebildet, wie das in Fig. 5 in vergrößertem Maßstab dargestellt und dort für den Magnetkern 87 und den Abtaster 94 in großer Ausführlichkeit beschrieben ist.

Im Betrieb gleiten die Kufen 177, 178 auf dem Etikettenband 13, und der Abtaster 185 liegt mit Vorspannung gegen das Etikettenband 13 an, da er in der Ruhestellung (vgl. Fig. 12) über die Ebene 96 hinaussteht, welche durch die Unterseite der Kufen 177, 178 definiert wird, Deshalb folgt der Abtaster 185 allen Unebenheiten auf der Oberfläche des Etikettenbands 13. Die Auswerteschaltung stimmt mit Fig. 6 überein, so daß man auch die Meßkurve 112 gemäß Fig. 9 erhält.

Versuche haben gezeigt, daß derzeit das erste Ausführungsbeispiel mit dem Etikettensensor 45 nach den Fig. 1 bis 4 bevorzugt wird, doch liefert auch der Etike-tensensor 145 nach den Fig. 12 und 13 gute Resultate. Da die Wirkungsweise in beiden Fällen die gleiche ist, wird auf die Erläuterungen zum ersten Ausführungsbeispiel, also dem Etikettensensor 45, verwiesen. - Die Bewegungsrichtung des Etikettenbands 13 muß man sich in den Fig. 12 und 13 von rechts nach links vorstellen.

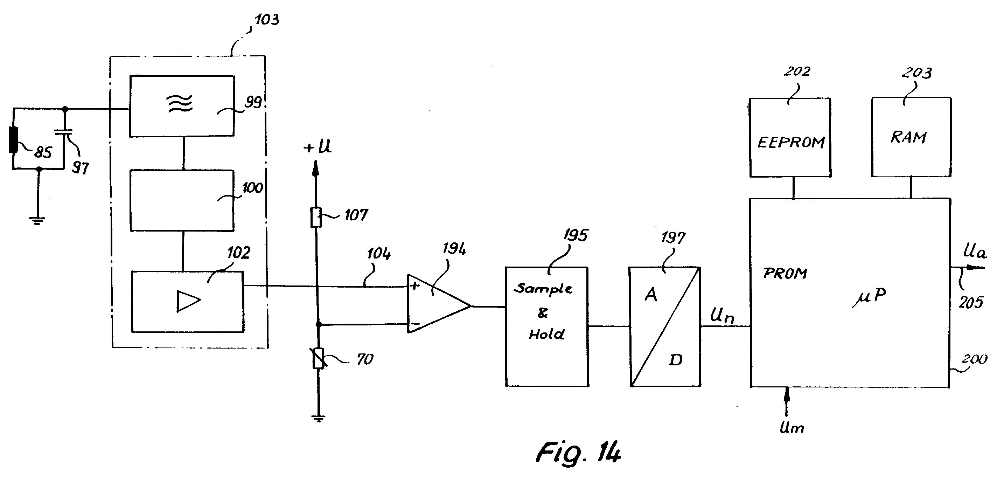

Fig. 14 zeigt eine Variante zu der in Fig. 6 dargestellten Auswerteschaltung; diese Variante der Auswerteschaltung paßt sich adaptiv an Dickenänderungen des Trägerbands 14, ebenso an Änderungen von Meßw-erten infolge von Erwärmung oder Abkühlung; sie gestattet auch eine automatische Ausmessung eines neuen Etikettenbands 13. Gleiche oder gleichwirkende Teile wie in Fig. 6 werden mit denselben Bezugszeichen bezeichnet wie dort und gewöhnlich nicht nochmals beschriben. Insbesondere stimmt der linke Teil der Schaltung gemäß Fig. 14 mit dem entsprechenden Teil der Fig. 6 überein, wie man ohne weiteres erkennt.

An den Ausgang eines Differenzverstärkers 194, dessen Anschlüsse mit denen des Komparators 106 der Fig. 6 übereinstimmen, ist hier ein Sample and Hold-Speicher 195 angeschlossen, der jeweils, von einem Taktgeber gesteuert, Ausgangswerte des Differenzverstärkers 194 kurzzeitig zwischenspeichert, bis sie von der anschließenden Schaltung verarbeitet sind. An den Ausgang des Speichers 195 ist ein Analog-Digital-Wandler 197 angeschlossen, der die analogen Meßwerte am Ausgang des Speichers 195 in digitale Ausgangswerte Un für einen Mikroprozessor 200 übersetzt, der einen internen Programmspeicher PROM enthält, ferner ein EEPROM 202 mit den Daten des Sensors, und in üblicher Weise ein RAM 203.

Der Mikroprozessor 200 gibt an seinem Ausgang 205 ein Ausgangssignal Ua ab. Ua = H (hohes Aus-gangssignal) bedeutet, daß sich der Abtaster 94, 95 bzw. 185 auf einem Etikett 17 befindet, und Ua = L (niedriges Ausgangssignal) bedeutet, daß sich der Abtaster in einer Lücke 20 zwischen zwei Etiketten 17 befindet.

Dem Mikroprozessor 200 kann von außen, z.B. über einen (nicht dargestellten) Schalter, oder von einer übergeordneten Steuerung, ein Signal Um zugeführt werden. Um = H (hoch) bedeutet, daß ein normaler Abtastvorgang stattfinden soll, d.h. daß die Sensoranordnung feststellen soll, ob sich der Abtaster auf einem Etikett oder in einer Lücke befindet.

Um = L (niedrig) bedeutet, daß ein Meßvorgang ablaufen soll, d.h. daß ein Stück eines Etikettenbands, z.B. 30 cm, fortlaufend abgetastet wird, und daß aus den hier ermittelten Werten Un eine Dicken-Referenzspannung Uref (für den internen Gebrauch des Mikroprozessors 200) bestimmt werden soll.

Im EEPROM 202 werden die Daten des Sensorssystems abgelegt. Da - infolge von Toleranzen der Bauteile - selten zwei Sensorsysteme völlig identisch sein werden, kann man z.B. ein Sensorsystem in der Weise ausmessen, daß man für verschiedene Abstandswerte D (Fig. 5) bzw. für die ihnen entsprechenden Dickenwerte d (Fig. 5) des Etikettenbands 13 die Signale Un mißt und im EEPROM als Wertetabelle speichert, z.B. d = 0,055 mm entspricht Un = 2,4 V, d = 0,06 mm entspricht U = 2,65 V, etc. Alternativ kann man diese Werte durch eine Funktion ersetzen, die ihre mathematische Beziehung widerspiegelt, z.B. eine lineare Beziehung vom Typ

$$Un = a \times d + b.$$

Man kann dies entweder für jeden Sensor separat machen, also sozusagen dessen Eichkurve im EEPROM 202 speichern, oder generell gemittelte Werte für diesen Typ von Sensor. Dies hängt von den Genauigkeitsforderungen ab.

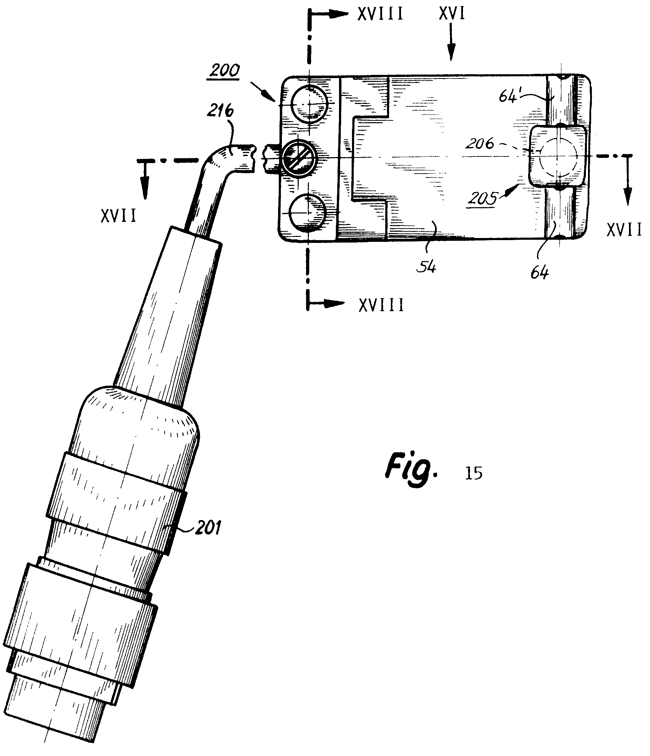

Die Fig. 15 bis 18 zeigen eine zweite Variante eines erfindungsgemäßen Etikettensensors, der hier mit der Bezugszahl 200 bezeichnet ist.

Die Benutzung des Etikettensensors 45 nach den Fig. 2 bis 4 bei der Anmelderin hat gezeigt, daß dieser Sensor sehr empfindlich ist und sich ganz besonders für hohe Etikettiergeschwindigkeiten eignet. Jedoch ist die Anordnung mit der Blattfeder 80 und dem offenliegenden Ferritkern 87 sehr empfindlich gegen mechanische Beschädigungen. An Etikettiermaschinen wird häufig mit Schraubenziehern, Zangen etc. gearbeitet, und die Erfahrung hat gezeigt, daß dabei diese Blattfeder 80 und/oder der Ferritkern 87 leicht beschädigt werden können.

Der Etikettensensor 200 vermeidet solche Beschädigungen durch eine geschlossene Bauweise, wobei die Funktion der Blattfeder 80 von den Federn 58 (Fig. 8) übernommen wird. Der Etikettensensor 200 eignet sich deshalb weniger für sehr hohe Etikettiergeschwindigkeiten, sehr gut aber für mittlere und niedrige Geschwindigkeiten, und er läßt sich auch etwas preiswerter herstellen.

Die mechanische Befestigung des Sensors 200 an der Etikettiermaschine ist identisch mit der Befestigung, die in den Fig. 1A, 2, 3 und 11A dargestellt ist, d.h. der Sensor 200 ist auch hier mit einer prismenförmigen Aussparung 52 seines Trägerteils 54 versehen, und in diese Aussparung greift der in Fig. 2 dargestellte Zapfen 49 ein und bildet zusammen mit der Aussparung 52 ein Gelenk, das in Fig. 2 mit 53 bezeichnet ist. Die Federn 58 und die von ihnen mit Vorspannung beaufschlagten Kugeln 60, die mit den entsprechenden Teilen der Fig. 2 übereinstimmen, erzeugen ein Drehmoment, das im Uhrzeigersinn um das Gelenk 53 herum wirkt und den Sensor 200 mit seinem rechten Ende (bezogen auf Fig. 20) gegen das Etikettenband preßt, z.B. das in den Fig. 7 und 8 mit 13 bezeichnete Etikettenband. Zur Anlage gegen dieses Etikettenband 13 dienen - wie in Fig. 2 bis 4 - zwei Niederhalter 64, 64', die auf ihrer dem Etikettenband 13 zugewandten Seite entsprechend gerundet und geglättet sind, damit sie in den Etiketten 17 keine Kratzspuren erzeugen. Diese Niederhalter 64, 64' pressen folglich das Etikettenband 13 gegen eine entsprechende Stützfläche aus Metall, z.B. gegen die Spendekante 34, wie in Fig. 1A dargestellt. (Die Anordnung ganz vorne an der Spendekante 34 ist im Rahmen der vorliegenden Erfindung optimal und erlaubt eine äußerst hohe Etikettiergenauigkeit, die mit keiner anderen Sensoranordnung erreichbar erscheint.)

Die Niederhalter 64, 64' werden bevorzugt aus Oxidkeramik oder einem sonstigen harten Werkstoff hergestellt. Bei der Bewegung des Etikettenbandes 13 folgen sie dessen Oberfläche und bewegen sich folglich dementsprechend nach oben (über einem Etikett 17) oder nach unten (in der Lücke 20 zwischen zwei Etiketten).

Zwischen den Niederhaltern 64, 64' befindet sich im Trägerteil 54 eine Sensorspulen anordnung 205. Diese befindet sich also im wesentlichen im Inneren des Gehäuses 214 des Sensors 200 - dieses Gehäuse 214 wird zweckmäßig aus einem Kunststoff hergestellt - und kann folglich bei normaler Behandlung kaum beschädigt werden, zumal sie keine eigene Feder hat, sondern sich zusammen mit dem Gehäuse 214 des Sensors 200 nach oben oder nach unten bewegt. Dabei ist es - wie bei den vorhergehenden Ausführungsbeispielen - sehr vorteilhaft, daß das Gelenk 53 (Fig. 1A) nahe beim Etikettenband 13 liegt.

Der Aufbau der Sensorspulenanordnung 205 ist identisch mit der Anordnung 75 der Fig. 5, d.h. sie weist einen Ferritkern 206 auf, der identisch mit dem Halbschalenferritkern 87 der Fig. 5 ist und sich wie dieser nach unten öffnet. Der Ferritkern 206 enthält eine Wicklung 207, die der Wicklung 85 der Fig. 5 entspricht. Der Ferritkern 206 ist am unteren Ende eines rohrförmigen Isolierteils 209 angeordnet, durch das die Anschlußdrähte 210 der Wicklung 207 hindurchgeführt sind. Diese Drähte 210 sind mit einer (nicht dargestellten) gedruckten Schaltung auf einer Platine 212 verbunden, welche sich im oberen Teil des Gehäuses 214 befindet. Eine Leitung 216 dient dazu, einen Anschlußstecker 201 mit der Platine 212 zu verbinden. Die Schaltung auf der Platine 212 entspricht einer der Schaltungen nach den Fig. 6 oder 14, und auf die dortigen Beschreibungen wird deshalb ausdrücklich verwiesen.

Arbeitsweise der Fig. 15 bis 18

Die Wicklung 207 wird mit einem HF-Signal von z.B. 1 MHz erregt und gibt deshalb auf der Unterseite des Ferritkerns 207 ein entsprechendes elektromagnetisches Wechselfeld ab. Dieses Feld erzeugt Wirbelströme in einer gegenüberliegenden elektrisch leitenden Stützfläche, z.B. in der Ablösekante 34 der Fig. 1A. Diese Wirbelströme dämpfen die Schwingungen in dem Resonanzkreis aus dem Kondensator 97 (Fig. 6 oder 14) und der zu ihm parallel geschalteten Spule 207 (in Fig. 6 und 14 ist diese Spule mit 85 bezeichnet). Die Wirbelströme werden schwächer, wenn sich die Niederhalter 64, 64' - diese fluchten gemäß Fig. 15 ungefähr mit dem Ferritkern 206 - auf einem Etikett 17 befinden, und man erhält deshalb in diesem Fall eine höhere Spannung an der Wicklung 207. Die Wirbelströme werden stärker, wenn sich die Niederhalter 64, 64' in einer Lücke 20 (Fig. 7) befinden, und dies führt zu einer stärkeren Dämpfung und deshalb einer niedrigeren Spannung an der Wicklung 207. Auf diese Weise kann man anhand dieser Spannung diskriminieren, ob sich die Niederhalter 64, 64' auf einem Etikett 17 oder in einer Lücke 20 befinden, und zwar unabhängig vom Werkstoff des Etiketts 17 oder des Trägerbandes 14. Es hat sich sogar gezeigt, daß ein erfindungsgemäßer Sensor bei Etiketten verwendet werden kann, die an ihrer Oberfläche eine Aluminiumschicht haben.

Die Einstellung erfolgt in der Weise, daß man die Niederhalter 64, 64' in einer Lücke 20 plaziert und dann so lange am Potentiometer 70 (Fig. 6 oder 14) dreht, bis die in Fig. 2 und 6 dargestellte Leuchtdiode 69 aufleuchtet, weil der Transistor 109 leitend wird und die Leuchtdiode 69 über den Widerstand 108 und den Transistor 109 Strom erhält. Anschließend wird das Potentiometer 70 noch um einige Grade im gleichen Sinne weitergedreht, um eine stabile Betriebsstellung zu erreichen. Werden anschließend die Niederhalter 64, 64' zur Kontrolle auf ein Etikett 17 positioniert, so wird der Transistor 109 gesperrt, die Leuchtdiode 69 erlischt, und der Einsteller der Maschine weiß, daß der Sensor richtig eingestellt ist. Der gesamte Einstellvorgang dauert deshalb weniger als eine Minute.

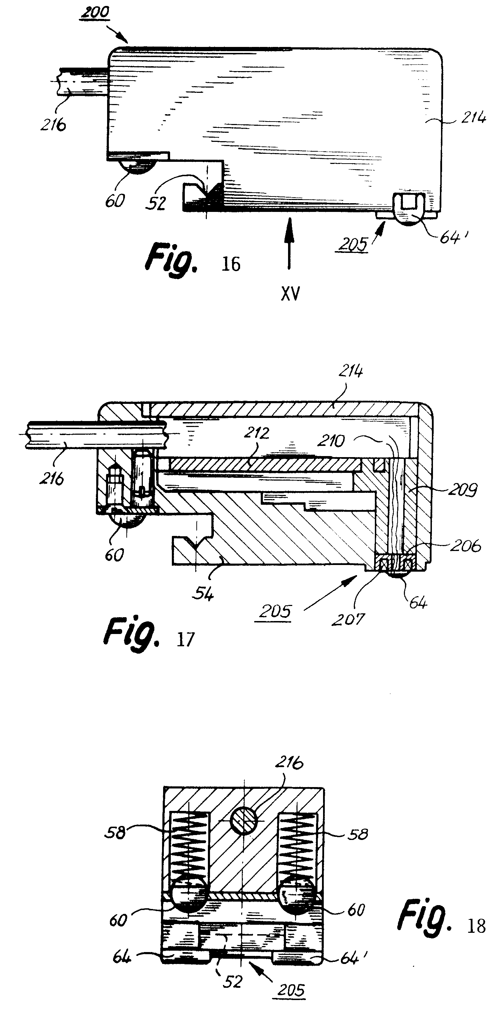

Wie Fig. 18 klar zeigt, ragen die Niederhalter 64, 64' über die Unterseite der Spulenanordnung 205 nach unten vor und erzeugen so einen Abstand zwischen der Spulenanordnung 205 und dem Etikettenband 13. Die Funktion dieses Abstandes wurde bei Fig. 5 eingehend erläutert. Dort, und in Fig. 9, ist dieser Abstand mit D bezeichnet. Auf die dortige Beschreibung wird deshalb verwiesen.

Im Rahmen der vorliegenden Erfindung sind naturgemäß vielfache Abwandlungen und Modifikationen möglich. So kann z.B. die Form des Halbschalenferrits 87 (Fig. 5) oder 206 (Fig. 16) in weiten Grenzen verändert werden und ist nur als Beispiel zu verstehen. Die dargestellte Form erscheint aber derzeit als optimal. Ebenso hat es sich als sehr vorteilhaft erwiesen, bei der ersten Variante nach den Fig. 2 bis 5 die Feder 80 austauschbar zu machen, denn je nach dem Material der verwendeten Etiketten 17 kann eine harte oder weiche Feder 80 vorteilhafter sein, und es kann besonders vorteilhaft sein, diese Feder 80 dadurch leicht austauschbar zu machen, daß die elektrischen Anschlüsse der Wicklung 85 bzw. 207 entsprechend ausgebildet werden. Die Drehachse der Niederhalter 64, 64' bzw. des Abtasters 95 sollte bevorzugt so liegen, daß sich Niederhalter und Abtaster bei ihren Auslenkbewegungen etwa senkrecht zur Oberfläche der Etiketten 17 bewegen.

**Patentansprüche**

1. Etikettensensor zur Abtastung eines mit Etiketten (17) versehenen Trägerbandes (14) - im folgenden Etikettenband (13) genannt - und zur Steuerung von Etikettiervorgängen,
mit einem Trägerteil (54), welches mit mindestens einem Niederhalter (64, 64') versehen ist und Mittel zur elastischen Abstützung an einer Etikettiermaschine aufweist, um den mindestens einen Niederhalter (64, 64') gegen das Etikettenband und dieses gegen eine mindestens bereichsweise elektrisch leitende Auflage (34; 122) zu pressen,
mit einem mit einer Wicklung (85) versehenen ferromagnetischen Kern (87; 184),
mit einem mit diesem ferromagnetischen Kern verbundenen Abtaster (94, 95; 185) für die die Etiketten (17) aufweisende Seite des Etikettenbandes (13), welcher Abtaster im Betrieb auf dem Etikettenband (13) gleitet,
so ausgebildet ist, daß er die Lücken (20) zwischen aufeinanderfolgenden Etiketten (17) abtasten kann, und welcher seine Bewegungen auf den ferromagnetischen Kern (87; 184) überträgt,
mit einem zwischen Trägerteil (54) und Abtaster angeordneten Federelement (58; 80) zur elastischen Anpressung des Abtasters (94, 95; 185) gegen die die Etiketten (17) aufweisende Seite des Etikettenbandes (13),
mit Mitteln zur Erregung der Wicklung (85) mit Hochfrequenz,
und mit einer Auswerteschaltung (103) für ein elektrisches Signal an dieser Wicklung (85).

2. Etikettensensor nach Anspruch 1, bei welchem der Abtaster (94, 95; 185) im unbelasteten Zustand über eine Ebene (96) vorsteht, welche durch das proximale Ende des mindestens einen Niederhalters (64, 64'; 177, 178) geht (Fig. 4; Fig. 12).

3. Etikettensensor nach Anspruch 1 oder 2, bei welchem der mit einer Wicklung (85) versehene ferromagnetische Kern (87; 184) im Bereich des freien Endes eines federnd auslenkbaren Blattfederelements (80; 182) angeordnet ist.

4. Etikettensensor nach Anspruch 3, bei welchem das Blattfederelement (80; 182) in auswechselbarer Weise an einem Träger (54) befestigt ist.

5. Etikettensensor nach Anspruch 3 oder 4, bei welchem sich das Blattfederelement (80; 182) etwa parallel zur Bewegungsbahn des Etikettenbandes (13) erstreckt.

6. Etikettensensor nach Anspruch 3, 4 oder 5, bei welchem das freie Ende des Blattfederelements (80; 182) in die Bewegungsrichtung des Etikettenbandes (13) zeigt.

7. Etikettensensor nach einem oder mehreren der vorhergehenden Ansprüche, bei welchem der Träger (176) etwa nach Art eines Schlittens ausgebildet ist, dessen Kufen Niederhalter (177, 178) bilden, wobei zwischen den Kufen ein elastisch auslenkbares Element mit dem ferromagnetischen Kern und dem Abtaster angeordnet ist.

8. Etikettensensor nach einem oder mehreren der vorhergehenden Ansprüche, bei welchem der Abtaster (94, 95; 185) im Bereich des mit einer Wicklung (85; 207) versehenen ferromagnetischen Kerns (87; 184) angeordnet und so ausgebildet ist, daß im Betrieb ein vorgegebener Mindestabstand (D) zwischen dem ferromagnetischen Kern (87; 184) und dem elektrisch leitenden Abschnitt einer Auflage (34; 122) für das Etikettenband (13) entsteht.

9. Etikettensensor nach einem oder mehreren der vorhergehenden Ansprüche, bei welchem der Abtaster (94, 95; 185) im Bereich der Längsachse des ferromagnetischen Kerns (87; 184) angeordnet und bevorzugt nach Art eines Stiftes oder Stößels ausgebildet ist.

10. Etikettensensor nach einem oder mehreren der vorhergehenden Ansprüche, bei welchem der Abtaster (94, 95; 185) mindestens an seinem zur Anlage gegen das Etikettenband (13) bestimmten Ende (95) aus einem verschleißarmen Material ausgebildet ist, insbesondere aus Oxidkeramik, einem Halbedelstein, oder einem Edelstein.

11. Etikettensensor zur Abtastung eines mit Etiketten (17) versehenen Trägerbandes (14) - im folgenden Etikettenband (13) genannt - und zur Steuerung von Etikettiervorgängen,
    mit einem Trägerteil (54), welchem Mittel (58) zur elastischen Abstützung an einer Etikettiermaschine zugeordnet sind,
    um das Trägerteil (54) in Richtung gegen das Etikettenband (13) zu beaufschlagen,
    mit einem am Trägerteil (54) fest angeordneten, mit einer Wicklung (207) versehenen ferromagnetischen Kern (206),
    mit Mitteln zur Erregung der Wicklung (207) mit Hochfrequenz und mit einer Auswerteschaltung (103) für das elektrische Signal an dieser Wicklung (207),
    mit am Trägerteil (54) angeordneten Niederhaltern (64, 64'), welche sich im wesentlichen senkrecht zur Bewegungsrichtung des Etikettenbands (13) erstrecken, als Abtaster für die Lücken (20) zwischen aufeinanderfolgenden Etiketten (17) des Etikettenbands (13) ausgebildet sind, und im Betrieb auf diesem gleiten und es gegen eine elektrisch leitende Auflage (34; 122) pressen, wobei der mit einer Wicklung (207) versehene ferromagnetische Kern (206) zwischen den als Abtaster ausgebildeten Niederhaltern (64, 64') angeordnet ist.

12. Etikettensensor nach Anspruch 11, bei welchem die als Abtaster ausgebildeten Niederhalter (64, 64') so ausgebildet sind, daß im Betrieb ein vorgegebener Mindestabstand (D) zwischen dem ferromagnetischen Kern (206) und der elektrisch leitenden Auflage (34; 122) für das Etikettenband (13) entsteht.

13. Etikettensensor nach Anspruch 11 oder 12, bei welchem die als Abtaster ausgebildeten Niederhalter (64, 64') mindestens an ihrem zur Anlage gegen das Etikettenband (13) bestimmten Bereich aus einem verschleißarmen Material ausgebildet sind, insbesondere aus Oxidkeramik, einem Halbedelstein, oder einem Edelstein.

14. Etikettensensor nach einem oder mehreren der Ansprüche 11 bis 13, bei welchem die als Abtaster ausgebildeten Niederhalter (64 bzw. 64') im wesentlichen auf einer gemeinsamen, gedachten Linie liegen.

15. Etikettensensor nach einem oder mehreren der vorhergehenden Ansprüche, bei welchem die Auswerteschaltung (Fig. 6) für die Diskriminierung zwischen Etiketten (17) einerseits und Lücken (20) zwischen Etiketten (17) andererseits ausgebildet ist.

16. Etikettensensor nach Anspruch 15, bei welchem in der Auswerteschaltung (Fig. 6) eine Diskriminierung zwischen Etikett (17) und Lücke (20) mittels eines Dicken - Referenzwerts vorgesehen ist.

17. Etikettensensor nach Anspruch 15 oder 16, bei welchem die Auswerteschaltung (Fig. 6) eine insbesondere visuelle Anzeigevorrichtung (69) zur Anzeige ihres Ausgangssignals, und bevorzugt eine Einstellvorrichtung (70) zur Einstellung auf die jeweiligen Werte des Etikettenbandes (13), aufweist.

18. Verwendung eines Etikettensensors nach einem oder mehreren der vorhergehenden Ansprüche an einer Etikettiermaschine (10) zur Verarbeitung von transparenten Etiketten.

19. Verwendung eines Etikettensensors nach einem oder mehreren der Ansprüche 1 bis 17 bei einer Etikettiermaschine (10), deren Auflage (34; 122) für das Etikettenband (13) im Bereich des bei der Erregung der Wicklung (85; 207) des Etikettensensors (45; 145; 200) mit Hochfrequenz entstehenden Magnetfelds einen elektrisch leitenden Abschnitt aufweist.

20. Verwendung eines Etikettensensors nach einem oder mehreren der Ansprüche 1 bis 17 bei einer Etikettiermaschine, wobei der Etikettensensor an der Etikettiermaschine (10) über eine Anlenkstelle (53) angelenkt ist, deren Drehachse mindestens nahezu parallel zur Ebene des Etikettenbandes (13) an der Abtaststelle verläuft.

21. Verwendung nach Anspruch 20, wobei ein elastisches Glied (58) vorgesehen ist, welches den Etikettensensor mit einem Drehmoment in Richtung auf das Etikettenband (13) beaufschlagt.

22. Verwendung nach Anspruch 20 oder 21, wobei am Etikettensensor eine Feder (58) vorgesehen ist, welche nach der Montage an der Etikettiermaschine (10) gegen diese wirkt und das Drehmoment erzeugt, oder umgekehrt.

23. Verwendung nach Anspruch 22, wobei die Feder (58) auf ein am Etikettensensor verschiebbar angeordnetes Druckorgan, insbesondere eine Kugel (60), wirkt, welches Druckorgan nach der Montage mit Vorspannung gegen ein Teil (46; 46') der Etikettiermaschine (10) anliegt.

24. Verwendung nach Anspruch 23, wobei das Druckorgan (60) als Rastorgan für das Einrasten des Etikettensensors an der Etikettiermaschine (10) ausgebildet ist.

25. Verwendung eines Etikettensensors (45) nach einem oder mehreren der Ansprüche 1 bis 17 im vordersten Abschnitt der Ablösekante (35) einer Etikettiermaschine (10) (Fig. 1A).

26. Verwendung nach Anspruch 25, wobei der Abtaster des Etikettensensors (45) am vordersten Bereich der Ablösekante (35) angeordnet ist (Fig. 1A).

**Claims**

1. Label sensor for sensing a carrier strip (14) provided with labels (17) - referred to in the following as a label strip (13) - and for controlling labelling operations, comprising:

   - a carrier part (54) provided with at least one hold-down element (64, 64') and comprising means for elastic support on a labeling machine in order to press the at least one hold-down element (64, 64') against the label strip and the latter against an at least partially electrically conducting support (34; 122),
   - a ferromagnetic core (87; 184) provided with a winding (85),
   - a pick-up (94, 95; 185), connected with this ferromagnetic core, for the side of the label strip (13) exhibiting the labels (17), which pick-up slides on the label strip (13) in operation and is embodied so that it can sense the gaps (20) between successive labels (17) and transmits its movements to the ferromagnetic core (87; 184),
   - a spring element (58; 80) disposed between the carrier part (54) and the pick-up for elastically pressing the pick-up (94, 95; 185) against the side of the label strip (13) exhibiting the labels (17),
   - means for energising the winding (85) with high frequency, and an evaluation circuit (103) for an electrical signal at this winding (85).

2. Label sensor according to claim 1, wherein in the unloaded state the pick-up (94, 95; 185) projects over a plane (96) passing through the proximal end of the at least one hold-down element (64, 64'; 177, 178) (Fig. 4; Fig. 12).

3. Label sensor according to claim 1 or 2, wherein the ferromagnetic core (87; 184) provided with a winding (85) is disposed in the area of the free end of a resiliently deflectable leaf spring element (80; 182).

4. Label sensor according to claim 3, wherein the leaf spring element (80; 182) is fixed exchangeably to a carrier (54).

5. Label sensor according to claim 3 or 4, wherein the leaf spring element (80; 182) extends substantially parallel with the path of movement of the label strip (13).

6. Label sensor according to claim 3, 4 or 5, wherein the free end of the leaf spring element (80; 182) points in the direction of movement of the label strip (13).

7. Label sensor according to one or more of the preceding claims, wherein the carrier (176) is embodied roughly like a sledge whose runners form hold-down elements (177, 178), an elastically deflectable element with the ferromagnetic core and the pick-up being disposed between the runners.

8. Label sensor according to one or more of the preceding claims, wherein the pick-up (94, 95; 185) is disposed in the area of the ferromagnetic core (87; 184) provided with a winding (85; 207) and is embodied so that in operation a predetermined minimum distance (D) exists between the ferromagnetic core (87; 184) and the electrically conducting portion of a support (34; 122) for the label strip (13).

9. Label sensor according to one or more of the preceding claims, wherein the pick-up (94, 95; 185) is disposed in the area of the longitudinal axis of the ferromagnetic core (87; 184) and is preferably embodied like a pin or plunger.

10. Label sensor according to one or more of the preceding claims, wherein at least at its end (95) designed to bear against the label strip (13) the pickup (94, 95; 185) is formed of a wear-resistant material, in particular ceramic oxide, a semi-precious stone, or a precious stone.

11. Label sensor for sensing a carrier strip (14) provided with labels (17) - referred to in the following as a label strip (13) - and for controlling labelling operations, comprising:

- a carrier part (54) having means (58) associated therewith for elastic support on a labelling machine in order to act upon the carrier part (54) in a direction towards the label strip (13),
- a ferromagnetic core (206) fixed on the carrier part (54) and provided with a winding (207),
- means for energising the winding (207) with high frequency, and an evaluation circuit (103) for the electrical signal at this winding (207),
- hold-down elements (64, 64') disposed on the carrier part (54) and extending essentially at right-angles to the direction of movement of the label strip (13), said hold-down elements being embodied as pick-ups for the gaps (20) between successive labels (17) of the label strip (13) and sliding on the latter in operation and pressing it against an electrically conducting support (34; 122),

  the ferromagnetic core (206) provided with a winding (207) being disposed between the hold-down elements (64, 64') embodied as pick-ups.

12. Label sensor according to claim 11, wherein the hold-down elements (64, 64') embodied as pick-ups are formed so that in operation a predetermined minimum distance (D) exists between the ferromagnetic core (206) and the electrically conducting support (34; 122) for the label strip (13).

13. Label sensor according to claim 11 or 12, wherein, at least in their portions designed to bear against the label strip (13), the hold-down elements (64, 64') embodied as pick-ups are formed of a wear-resistant material, in particular ceramic oxide, a semi-precious stone, or a precious stone.

14. Label sensor according to one or more of claims 11 to 13, wherein the hold-down elements (64 resp. 64') embodied as pick-ups essentially lie on a common imaginary line.

15. Label sensor according to one or more of the preceding claims, wherein the evaluation circuit (Fig. 6) is adapted to discriminate between labels (17) on the one hand and gaps (20) between labels (17) on the other hand.

16. Label sensor according to claim 15, wherein in the evaluation circuit (Fig. 6) provision is made for discriminating between label (17) and gap (20) by means of a thickness reference value.

17. Label sensor according to claim 15 or 16, wherein the evaluation circuit (Fig. 6) comprises a preferably visual indicating device (69) for indicating its output signal, and preferably an adjusting device (70) for adjusting to the respective values of the label strip (13).

18. Use of a label sensor according to one or more of the preceding claims on a labelling machine (10) for processing transparent labels.

19. Use of a label sensor according to one or more of claims 1 to 17 on a labeling machine (10) whose support (34; 122) for the label strip (13) comprises an electrically conducting portion in the area of the magnetic field formed on energising the winding (85; 207) of the label sensor (45; 145; 200) with high frequency.

20. Use of a label sensor according to one or more of claims 1 to 17 on a labelling machine, wherein the label sensor is articulated on the labelling machine (10) by means of an articulation (53) whose pivot axis runs at least almost parallel with the plane of the label strip (13) at the sensing location.

21. Use according to claim 20, wherein an elastic member (58) is provided which which causes a torque acting on the label sensor in the direction of the label strip (13).

22. Use according to claim 20 or 21, wherein the label sensor is provided with a spring (58) which after fitment on the labelling machine (10) acts against the latter and produces the torque, or vice versa.

23. Use according to claim 22, wherein the spring (58) acts on a pressure member, in particular a ball (60), disposed displaceably on the label sensor, which pressure member, after fitment, bears with a bias against a part (46; 46') of the labelling machine (10).

24. Use according to claim 23, wherein the pressure member (60) is embodied as a locking member for locking the label sensor on the labelling machine (10).

25. Use of a label sensor (45) according to one or more of claims 1 to 17 in the foremost portion of the detaching edge (35) of a labelling machine (10) (Fig. 1A).

26. Use according to claim 25, wherein the pick-up of the label sensor (45) is disposed in the foremost area of the detaching edge (35) (Fig. 1A).

**Revendications**

1. Détecteur à étiquettes pour palper une bande porteuse (14) pourvue d'étiquettes (17), dénommée dans ce qui suit bande à étiquettes (13), et pour commander des opérations d'étiquetage, comprenant :

   - une pièce porteuse (54), qui est dotée d'au moins un élément de maintien (64, 64') et qui comporte des moyens pour le supportage élastique sur une machine d'étiquetage, afin de presser ledit élément de maintien (64, 64') contre la bande à étiquettes et celle-ci contre un appui (34 ; 122) électriquement conducteur au moins localement,
   - un noyau ferromagnétique (87 ; 184) pourvu d'un bobinage (85),
   - un palpeur (94, 95 ; 185) relié à ce noyau ferromagnétique, pour le côté de la bande à étiquettes (13) qui présente les étiquettes (17),
   - ledit palpeur glissant en service sur la bande à étiquettes (13) et étant réalisé de telle manière qu'il peut palper les intervalles (20) entre des étiquettes (17) successives, et transmet ses mouvements au noyau ferromagnétique (87 ; 184),
   - le détecteur comprenant un élément à ressort (68 ; 80) agencé entre la pièce porteuse (54) et le palpeur afin de presser élastiquement le palpeur (94, 95 ; 185) contre le côté de la bande à étiquettes (13) qui présente les étiquettes (17), et
   - des moyens pour exciter le bobinage (85) avec une haute fréquence, et un circuit d'évaluation (103) pour un signal électrique au niveau de ce bobinage (85).

2. Détecteur à étiquettes selon la revendication 1, dans lequel le palpeur (94, 95 ; 185) dépasse à l'état non chargé au-delà d'un plan (96) qui passe à travers l'extrémité proximale de l'élément de maintien (64, 64' ; 177, 178) (figure 4 ; figure 12).

3. Détecteur à étiquettes selon l'une ou l'autre des revendications 1 et 2, dans lequel le noyau ferromagnétique (87 ; 184) pourvu d'un bobinage (85) est agencé dans la région de l'extrémité libre d'un élément de ressort à lame (80 ; 182) susceptible de défléchir élastiquement.

4. Détecteur à étiquettes selon la revendication 3, dans lequel l'élément de ressort à lame (80 ; 182) est fixé de manière interchangeable sur un support (54).

5. Détecteur à étiquettes selon l'une ou l'autre des revendications 3 et 4, dans lequel l'élément de ressort à lame (80 ; 182) s'étend approximativement parallèlement au trajet de déplacement de la bande à étiquettes (13).

6. Détecteur à étiquettes selon l'une quelconque des revendications 3, 4 ou 5, dans lequel l'extrémité libre de l'élément de ressort à lame (80 ; 182) est dirigé dans la direction de déplacement de la bande à étiquettes (13).

7. Détecteur à étiquettes selon l'une ou plusieurs des revendications précédentes, dans laquelle le support (176) est réalisé approximativement à la manière d'un traîneau, dont les patins forment des éléments de maintien (177, 178) vers le bas, et un élément susceptible de défléchir élastiquement est agencé avec le noyau ferromagnétique et le palpeur.

8. Détecteur à étiquettes selon l'une ou plusieurs des revendications précédentes, dans lequel le palpeur (94, 95 ; 185) est agencé dans la région du noyau ferromagnétique (87 ; 184) doté d'un bobinage (85 ; 207), et est réalisé de telle façon qu'il se produit en service une distance minimum prédéterminée (D) entre le noyau ferromagnétique (87 ; 184) et le tronçon électriquement conducteur d'un appui (34 ; 122) pour la bande à étiquettes (13).

9. Détecteur à étiquettes selon l'une ou plusieurs des revendications précédentes, dans laquelle le palpeur (94, 95 ; 185) est agencé dans la région de l'axe longitudinal du noyau ferromagnétique (87 ; 184) et est de préférence réalisé à la manière d'une tige ou d'un poinçon.

10. Détecteur à étiquettes selon l'une ou plusieurs des revendications précédentes, dans laquelle le palpeur (94, 95 ; 185) est réalisé en un matériau résistant à l'usure, au moins à son extrémité (95) destinée à venir en contact contre la bande à étiquettes (13), en particulier en céramique aux oxydes, en pierre semi-précieuse, ou en pierre précieuse.

11. Détecteur à étiquettes pour palper une bande porteuse (14) dotée d'étiquettes (17), dénommée ci-après bande à étiquettes (13), et pour commander des opérations d'étiquetage, comprenant :

   - une pièce porteuse (54), à laquelle sont associés des moyens (58) pour un support élastique sur une machine d'étiquetage, afin de solliciter la pièce porteuse (54) en direction contre la bande à étiquettes (13),
   - un noyau ferromagnétique (206) agencé de manière fixe sur la pièce porteuse (54) et doté d'un bobinage (207),

13

- des moyens pour exciter le bobinage (207) avec une haute fréquence, et un circuit d'évaluation (103) pour le signal électrique au niveau de ce bobinage (207),

- des éléments de maintien (64, 64') agencés sur la pièce porteuse (54), qui s'étendent sensiblement perpendiculairement à la direction de déplacement de la bande à étiquettes (13), qui sont réalisés sous la forme d'un palpeur pour les intervalles (20) entre des étiquettes successives (17) de la bande à étiquettes (13), et qui glissent en service sur celle-ci et la pressent contre un appui électriquement conducteur (34 ; 122), le noyau ferromagnétique (206) pourvu d'un bobinage (207) étant agencé entre les éléments de maintien (64, 64') réalisés sous la forme de palpeurs.

12. Détecteur à étiquettes selon la revendication 11, dans laquelle les éléments de maintien (64, 64') réalisés sous la forme de palpeurs sont réalisés de telle manière qu'il apparaît en service une distance minimum prédéterminée (D) entre le noyau ferromagnétique (206) et l'appui électriquement conducteur (34 ; 122) pour la bande à étiquettes.

13. Détecteur à étiquettes selon l'une ou l'autre des revendications 11 et 12, dans lequel les éléments de maintien (64, 64') réalisés sous la forme de palpeurs, sont réalisés en un matériau résistant à l'usure, au moins dans leur région destinée à venir en contact contre la bande à étiquettes (13), en particulier en céramique aux oxydes, en pierre semi-précieuse, ou en pierre précieuse.

14. Détecteur à étiquettes selon l'une ou plusieurs des revendications 11 à 13, dans lequel les éléments de maintien (64, 64') réalisés sous la forme de palpeurs sont situés sensiblement sur une ligne imaginaire commune.

15. Détecteur à étiquettes selon l'une ou plusieurs des revendications précédentes, dans lequel le circuit d'évaluation (figure 6) est réalisé pour la discrimination entre les étiquettes (17) d'une part et les intervalles (20) entre les étiquettes (17) d'autre part.

16. Détecteur à étiquettes selon la revendication 15, dans lequel il est prévu dans le circuit d'évaluation (figure 6) une discrimination entre les étiquettes (17) et les intervalles (20) au moyen d'une valeur de référence en épaisseur.

17. Détecteur à étiquettes selon l'une ou l'autre des revendications 15 et 16, dans lequel le circuit d'évaluation (figure 6) comportent un dispositif d'affichage (69) en particulier visuel pour l'affichage de son signal de sortie, et de préférence un dispositif de réglage (70) pour le réglage aux valeurs respectives de la bande à étiquettes (13).

18. Utilisation d'un détecteur à étiquettes selon l'une ou plusieurs des revendications précédentes sur une machine d'étiquetage (10) pour le traitement d'étiquettes transparentes.

19. Utilisation d'un détecteur à étiquettes selon l'une ou plusieurs des revendications 1 à 17, dans une machine d'étiquetage (10), dont l'appui (34 ; 122) pour la bande à étiquettes (13) présente un tronçon électriquement conducteur dans la région du champ magnétique qui apparaît lors de l'excitation du bobinage (25 ; 207) du détecteur à étiquettes (45 ; 145 ; 200) avec une haute fréquence.

20. Utilisation d'un détecteur à étiquettes selon l'une ou plusieurs des revendications 1 à 17 dans une machine d'étiquetage, le détecteur à étiquettes étant articulé sur la machine d'étiquetage (10) via un emplacement d'articulation (53), dont l'axe de rotation s'étend au moins pratiquement parallèlement au plan de la bande à étiquettes (13) à l'emplacement de palpage.

21. Utilisation selon la revendication 20, dans laquelle est prévu un organe électrique (58) qui sollicite le détecteur à étiquettes avec un couple de rotation en direction de la bande à étiquettes (13).

22. Utilisation selon l'une ou l'autre des revendications 20 et 21, dans laquelle il est prévu un ressort (58) sur le détecteur à étiquettes, lequel agit après le montage sur la machine d'étiquetage (10) contre celle-ci et produit le couple de rotation, ou inversement.

23. Utilisation selon la revendication 22, dans laquelle le ressort (58) agit sur un organe de pression agencé en déplacement sur le détecteur à étiquettes, en particulier une bille (60), cet organe de pression s'appliquant après le montage sous précontrainte contre une partie (46 ; 46') de la machine d'étiquetage (10).

24. Utilisation selon la revendication 23, dans laquelle l'organe de pression (60) est réalisé sous la forme d'un organe à enclenchement pour l'encliquetage du détecteur à étiquettes sur la machine d'étiquetage (10).

25. Utilisation d'un détecteur à étiquettes (45) selon l'une ou plusieurs des revendications 1 à 17 dans le tronçon situé le plus en avant de l'arête de détachement (35) d'une machine d'étiquetage (10) (figure 1A).

26. Utilisation selon la revendication 25, dans laquelle le palpeur du détecteur à étiquettes (45) est agencé dans la région située le plus en avant de l'arête de détachement (35) (figure 1A).

Fig. 1A

Fig. 1

EP 0 569 024 B1

Fig.2

Fig.3

Fig.4

17

Fig. 5

Fig.6

Fig. 7

Fig. 8

*Fig. 9*

U [v]

D (mm)

112

EP 0 569 024 B1

Fig. 10 A

Fig. 10 B

EP 0 569 024 B1

Fig. 11A

Fig. 11

Fig. 12

Fig. 13

Fig. 14

EP 0 569 024 B1

XVIII → XVI

200

216

XVII

64'

206

205

54

64

XVII

XVIII →

**Fig.** 15

201

*200*

216
214
60
52
205
64'

**Fig.** 16

XV

214
212
210
216
209
206
60
54
64
**205** 207

**Fig.** 17

216
58
58
60
60
64
64'
52
**205**

**Fig.** 18